# EUROPEAN PATENT APPLICATION

(11) **EP 4 324 691 A1**
(43) Date of publication of application: **21.02.2024**
(21) Application number: 22190835.3
(22) Date of filing: 17.08.2022
(51) Int. Cl.: B60N 2/07, B60N 2/015, B60N 2/14

(54) **A SEAT SYSTEM FOR A VEHICLE AND A VEHICLE COMPRISING A SEAT SYSTEM**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: JONSSON, Tony, 441 91 ALINGSÅS (SE)
(74) Representative: Zacco Sweden AB

(57) **Abstract**

A seat system for a vehicle comprising a vehicle seat, an upper frame structure, a lower frame structure, an upper rail and a stationary lower rail attached to a floor structure of the vehicle. The vehicle seat is attached to the upper frame structure, the upper frame structure is rotatably attached to the lower frame structure, the lower frame structure is attached to the upper rail, and the upper rail is movably arranged in relation to the lower rail in a longitudinal direction. The seat system further comprises an elongated load member attached to the lower rail, and an upper part of the load member is extending into a lower portion of the upper rail. One or more lower parts of the load member are extending through the floor structure. The load member is configured for being directly in engagement with the floor structure and the lower portion of the upper rail in a vehicle impact event for establishing a first load path from the floor structure to the upper rail via the load member.

## Description

### TECHNICAL FIELD

The present disclosure relates to a seat system for a vehicle. The disclosure further relates to a vehicle comprising a seat system.

### BACKGROUND

Vehicle seat systems are commonly arranged with seat rails for a mechanical sliding connection between the vehicle seat and a floor structure of the vehicle. Conventional seat systems comprise a pair of two interconnected rails that are linearly slidable relative to each other, where a lower rail is stationary attached to the floor structure and an upper rail is fastened to the vehicle seat. With such a seat system, the vehicle seat is adjustable in a longitudinal vehicle direction for a convenient positioning of the vehicle seat. Vehicle seats that can be rotated in different positions are becoming more and more popular in vehicle applications. The rotational positioning is enabling a flexible seating solution.

Traditional seat systems with rotational seat positioning commonly have complex load paths from the floor structure to the vehicle seat, which is negative when the seat system is exerted to forces in a vehicle impact event. The complex load paths are resulting in heavy and costly constructions of the seat systems to achieve desired performance. This is especially of concern if the vehicles are equipped with vehicle seats having integral seat belt systems only connected to the vehicle seats, where all impact forces need to be absorbed by the vehicle seat construction.

There is thus a need for an improved seat system having the ability to absorb load in vehicle impact events efficiently for improved safety of vehicle occupants, where the seat system is fulfilling legal requirements, is lightweight in construction, and is having a low cost design.

### SUMMARY

An object of the present disclosure is to provide a seat system for a vehicle and a vehicle comprising a seat system where the previously mentioned problems are avoided. This object is at least partly achieved by the features of the independent claims. The dependent claims contain further developments of the seat system.

The disclosure concerns a seat system for a vehicle. The seat system comprises a vehicle seat, an upper frame structure, a lower frame structure, an upper rail and a stationary lower rail attached to a floor structure of the vehicle. The vehicle seat is attached to the upper frame structure, the upper frame structure is rotatably attached to the lower frame structure, the lower frame structure is attached to the upper rail, and the upper rail is movably arranged in relation to the lower rail in a longitudinal direction. The seat system further comprises an elongated load member attached to the lower rail, and an upper part of the load member is extending into a lower portion of the upper rail. One or more lower parts of the load member are extending through the floor structure. The load member is configured for being directly in engagement with the floor structure and the lower portion of the upper rail in a vehicle impact event for establishing a first load path from the floor structure to the upper rail via the load member.

Advantages with these features are that the seat system, where the upper frame structure is rotatably attached to the lower frame structure, has the ability to absorb loads efficiently in a vehicle impact event for increased safety of vehicle occupants through the load member connected to both the floor structure and to the lower portion. The first load path from the floor structure to the upper rail via the load member is preventing large deformations of the rails through the anchoring of the upper rail to the floor structure via the load member. The simple and efficient construction of the seat system with the load member is enabling symmetrical load paths all the way from the floor structure to the vehicle seat via the upper rail, allowing a compact construction of the system with low weight at a low cost. Through the interaction between the floor structure and the upper rail via the load member, forces are efficiently built up in the system in a vehicle impact event for a high system stiffness that is preventing large deformations.

In one embodiment, a swivel unit is arranged between the upper frame structure and the lower frame structure. The swivel unit is configured for enabling a rotational movement of the vehicle seat relative to the floor structure. The swivel unit is configured for establishing a second load path from the upper rail to the vehicle seat via the lower frame structure and the upper frame structure in a vehicle impact event. The swivel unit may have any suitable design that is enabling a simple and efficient rotational movement of the upper frame structure relative to the lower frame structure. The swivel unit may include bearing structures or similar arrangements for an efficient rotational displacement. The swivel unit may further be arranged as or comprise an electric motor connected to the upper frame structure or to the lower frame structure, where a motor shaft of the electric motor is connected to the other of the upper frame structure and the lower frame structure. In this way, the swivel unit is rotatably connecting the upper frame structure and the lower frame structure, and the connection of the upper frame structure to the lower frame structure by the swivel unit is efficiently preventing separation of the parts from each other in a vehicle impact event. The swivel unit is establishing a second load path for any rotational position of the vehicle seat relative to the floor structure for an efficient load distribution in a vehicle impact event. The second load path is efficiently preventing that the upper frame structure and the lower frame structure are separated from each other in a vehicle impact event for a strong and robust construction of the seat system.

In one embodiment, the seat system further comprises one or more connection members, where the one or more connection members are anchoring the upper frame structure to the lower frame structure when the vehicle seat is arranged in a forwards position or a rearwards position. Each connection member is configured for establishing a third load path when the vehicle seat is arranged in the forwards position or the rearwards position from the upper rail to the vehicle seat via the lower frame structure and the upper frame structure in a vehicle impact event. Each connection member is in this way establishing a third load path when the vehicle seat is arranged in the forwards position or the rearwards position for an efficient load distribution in a vehicle impact event. The connection members are efficiently preventing that the upper frame structure and the lower frame structure are separated from each other in a vehicle impact event for a strong and robust construction of the seat system.

In one embodiment, the upper frame structure and the lower frame structure comprise a front left side section, a front right side section, a rear left side section and a rear right side section. The connection members are arranged at one or more of the front left side section, front right side section, rear left side section and rear right side section. The arrangement of the connection members at side sections is securing an efficient load distribution via established third load paths in a vehicle impact event.

In one embodiment, each connection member comprises a first connection part arranged on the upper frame structure and a second connection part arranged on the lower frame structure. The first connection part or the second connection part is configured as a T-shaped connection element, and the other of the first connection part and the second connection part is configured as a track structure for receiving the T-shaped connection element in the forwards position or the rearwards position. The T-shaped and track structure configurations are securing a strong connection between the first connection parts and the second connection parts in a vehicle impact event when the vehicle seat is arranged in the forwards position or the rearwards position.

In one embodiment, the first connection part and the second connection part are configured for allowing rotation of the vehicle seat relative to the floor structure. The first connection part and the second connection part are configured for reducing play in a vertical direction between the upper frame structure and the lower frame structure when the vehicle seat is arranged in the forwards position or the rearwards position. The reduced play is enabling an efficient load distribution in a vehicle impact event via the connection members through the third load path when the vehicle seat is arranged in the forwards position or the rearwards position.

In one embodiment, the seat system further comprises a locking mechanism configured for locking the upper frame structure. The locking mechanism is in a locked state preventing rotational displacement between the upper frame structure and the lower frame structure. The locking mechanism is in an unlocked state allowing rotational displacement between the upper frame structure and the lower frame structure.

In one embodiment, the one or more lower parts of the load member are extending through corresponding openings of the floor structure. The extension of the lower parts through the openings is securing a firm engagement between the load member and the floor structure in a vehicle impact event. The openings are further simplifying the mounting of the lower rail to the floor structure.

In one embodiment, the one or more lower parts of the load member are configured for being in engagement with a lower surface of the floor structure in a vehicle impact event. The lower surface is absorbing the forces occurring in a vehicle impact event, and the floor structure is of a strong and robust construction. The engagement of the lower parts and the floor structure is securing that the lower rail is not separated from the floor structure in a vehicle impact event.

In one embodiment, the upper part of the load member has an upper T-shaped cross-sectional configuration with a laterally extending upper flange. The upper flange is configured for being in engagement with the lower portion of the upper rail in a vehicle impact event. The upper flange is efficiently engaging the lower portion of the upper rail in a vehicle impact event for a secure and strong connection between the load member and the upper rail. The secure connection is preventing that the upper rail is separated from the lower rail in a vehicle impact event.

In one embodiment, the lower portion of the upper rail has a bell-shaped cross-sectional configuration forming a cavity, where the cavity is configured for embracing the upper flange. The cavity is arranged around the upper flange of the load member for a simple and robust connection between the lower portion and the load member. The cavity is further allowing a longitudinal displacement of the upper rail in relation to the lower rail in normal operating conditions for positioning the vehicle seat, without any interaction between the load member and the lower portion.

In one embodiment, the upper rail comprises a first side section and a second side section joined to each other. The cavity is formed between the first side section and the second side section. The first side section comprises a lateral inwardly projecting first flange and the second side section comprises a lateral inwardly projecting second flange. The first flange and the second flange are arranged below the upper flange and configured for being in engagement with the upper flange in a vehicle impact event. The side sections are providing a simple construction of the upper rail, where the cavity is formed by the joined sections. The side sections may be constituted by welded sheet metal parts that are forming the cavity, the first flange, and the second flange.

In one embodiment, the one or more lower parts of the load member have lower T-shaped cross-sectional configurations with a laterally extending lower flange. The lower flange is configured for being in engagement with the floor structure in a vehicle impact event. The lower flange is efficiently engaging the floor structure in a vehicle impact event for a secure and strong connection between the load member and the floor structure. The secure connection through the lower flange is preventing that the lower rail is separated from the floor structure in a vehicle impact event.

The disclosure further concerns a vehicle comprising a seat system as described above.

### BRIEF DESCRIPTION OF DRAWINGS

The disclosure will be described in detail in the following, with reference to the attached drawings, in which
- Fig. 1a-c: show schematically, in side views, a vehicle with a seat system having a vehicle seat rotatably arranged relative to a floor structure of the vehicle,
- Fig. 2a-e: show schematically, in perspective views and in a view from above, parts of the seat system in different positions,
- Fig. 3a-b: show schematically, in perspective views, a connection member of the seat system in different positions,
- Fig. 4: shows schematically, in a perspective view from above, an upper rail and a lower rail of the seat system,
- Fig. 5: shows schematically, in an exploded perspective view, the upper rail and the lower rail of the seat system,
- Fig. 6: shows schematically, in a perspective view from above, the upper rail of the seat system,
- Fig. 7a-b: show schematically, in cross-sectional front views, the upper rail and the lower rail of the seat system in normal operating conditions and in a vehicle impact event,
- Fig. 8: shows schematically, in a perspective view from above, the lower rail of the seat system and a floor structure,
- Fig. 9a-c: show schematically, in perspective views from above, the lower rail of the seat system in different mounting positions relative to the floor structure,
- Fig. 10: shows schematically, in a perspective view from below, the lower rail of the seat system and the floor structure, and
- Fig. 11: shows schematically, in a perspective view from above, the upper rail and the lower rail of the seat system with a drive mechanism.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

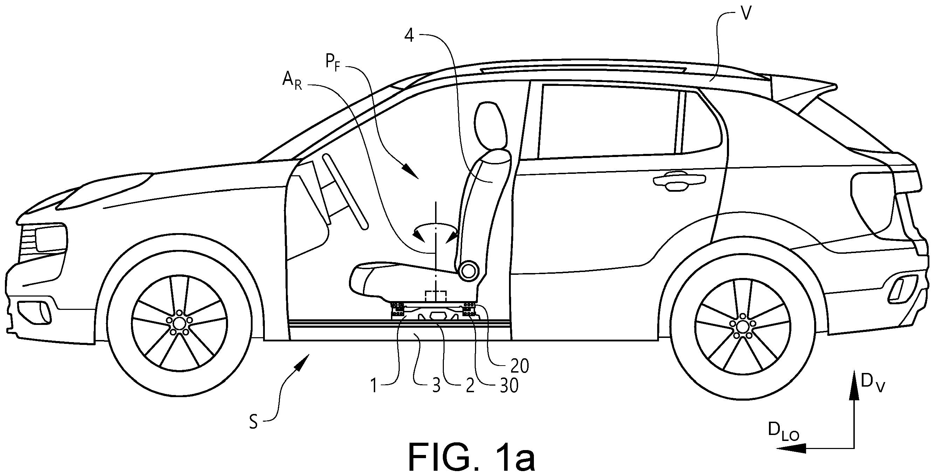

Figures 1a-c schematically shows a vehicle V with a seat system S. The seat system S comprises a vehicle seat 4, an upper frame structure 20, a lower frame structure 30, an upper rail 1 and a stationary lower rail 2 attached to a floor structure 3 of the vehicle V. The vehicle seat 4 is attached to the upper frame structure 20, and the upper frame structure 20 is rotatably attached to the lower frame structure 30. The lower frame structure 30 is attached to the upper rail 1, and the upper rail 1 is movably arranged in relation to the lower rail 2 in a longitudinal direction D_{LO}. The longitudinal direction D_{LO} of the seat system S is suitably corresponding to the longitudinal direction of the vehicle V.

A lateral direction D_{LA} is defined as a direction perpendicular to the longitudinal direction D_{LO}. The lateral direction D_{LA} of the seat system S is suitably corresponding to the lateral direction of the vehicle V. A vertical direction Dv is defined as a direction perpendicular to the longitudinal direction D_{LO} and the lateral direction D_{LA}. The vertical direction D_{V} of the seat system S is suitably corresponding to the vertical direction of the vehicle V. The expressions upper, lower, upwards, and downwards, used in this context are referring to positions or relative positions of the seat system S when installed in the vehicle V in the position illustrated in figures 1a-c.

The rotatable attachment of the upper frame structure 20 to the lower frame structure 30 is enabling a rotational displacement of the vehicle seat 4 relative to the floor structure 3 in different seating positions, as understood from figures 1a-c. Suitably, the upper frame structure 20 is rotatably arranged relative to the lower frame structure 30 around a rotational axis A_{R}. The rotational axis A_{R} may be arranged with an extension in the vertical direction Dv, or the rotational axis A_{R} may be arranged with an extension in a direction arranged at an angle relative to the vertical direction Dv, depending on the design and construction of the seat system S.

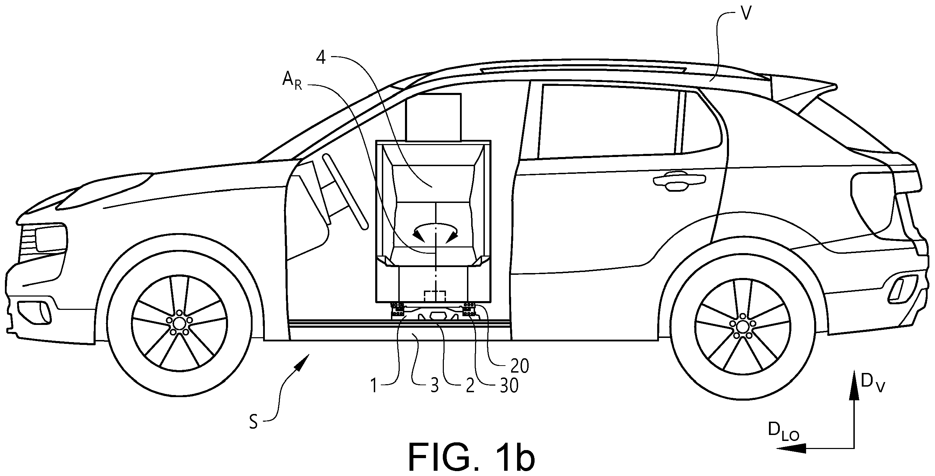

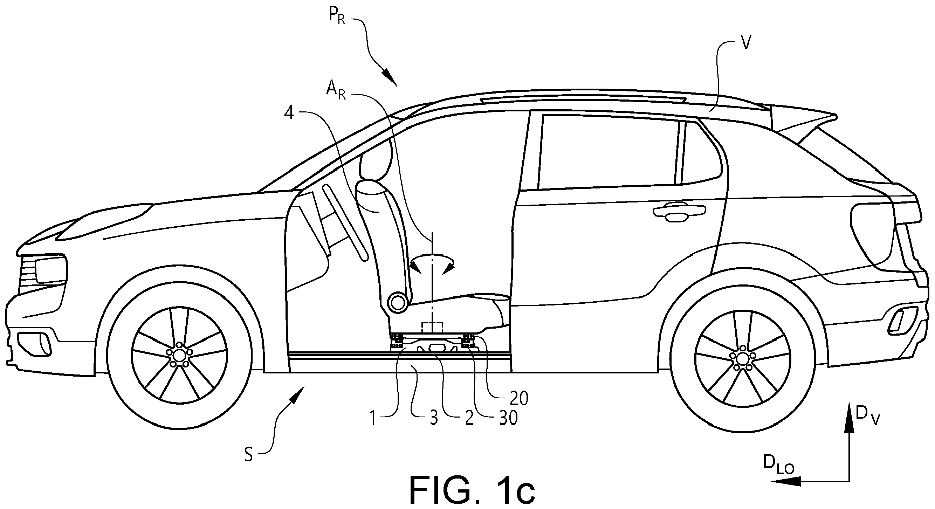

In figure 1a, the vehicle seat 4 is arranged in a forwards position P_{F}. The forwards position P_{F} is corresponding to a position of the vehicle seat in which a user of the vehicle V is seated in a forwards facing position suitable for driving or the vehicle. In figure 1c, the vehicle seat 4 is arranged in a rearwards position P_{R}. The rearwards position P_{R} is corresponding to a position of the vehicle seat in which a user of the vehicle V is seated in a rearwards facing position. The rearwards position P_{R} is arranged opposite to the forwards position P_{F}, or essentially opposite the forwards position P_{F}. In figure 1b, the vehicle seat 4 is arranged in an intermediate position between the forwards position P_{F} and the rearwards position P_{R}. The vehicle seat 4 is suitably enabled to adopt any rotational position around the rotational axis A_{R}.

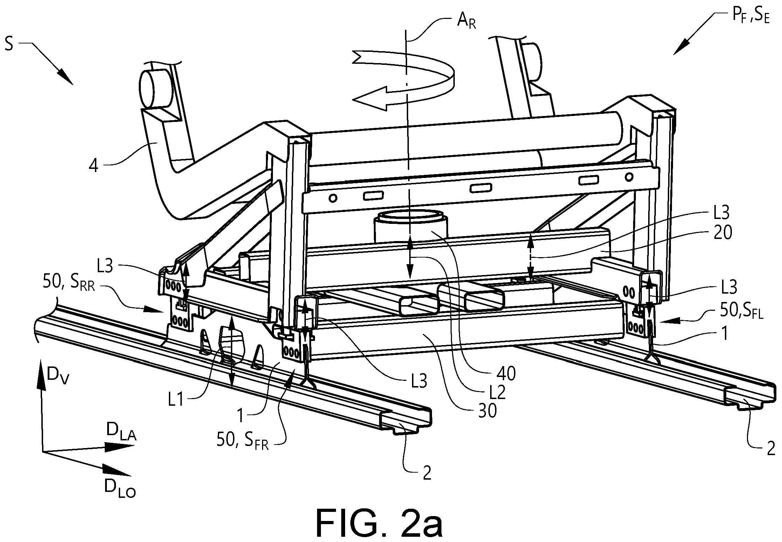

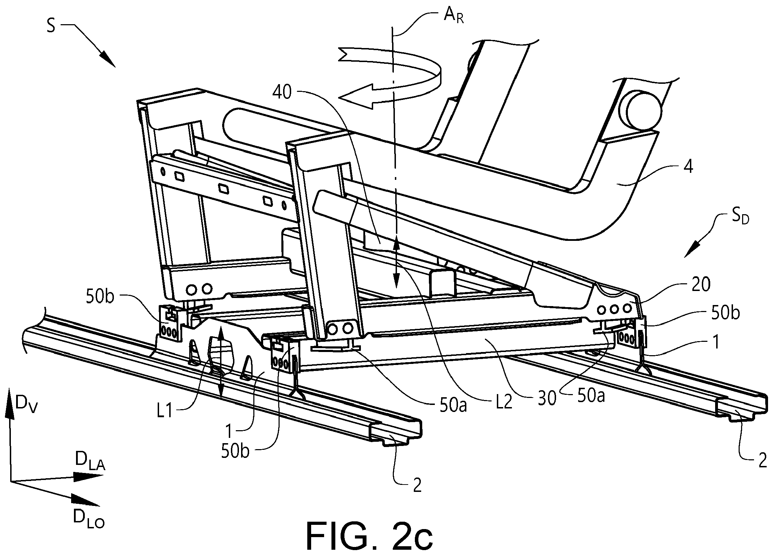

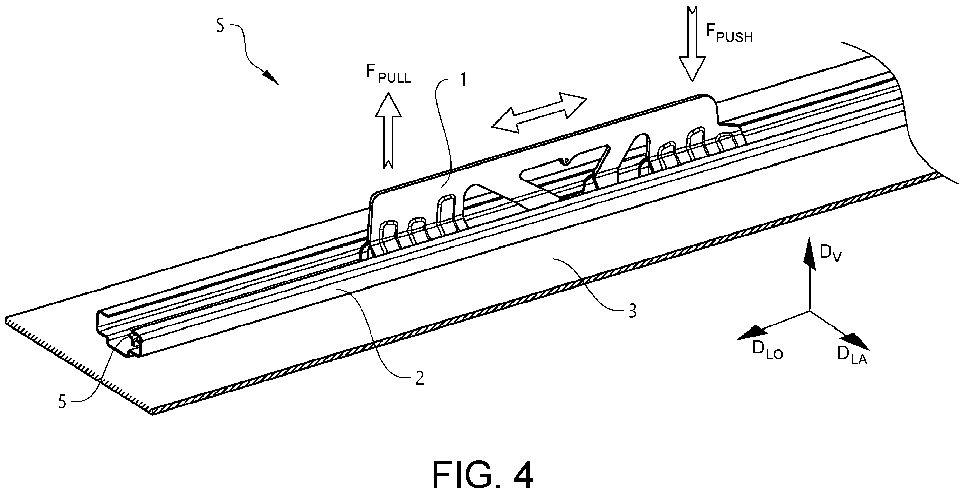

The upper rail 1 and the lower rail 2 are schematically illustrated in more detail in figures 4-6, 7a-b, 8, 9a-c, and 10-11. In these figures, the upper rail 1 and the lower rail 2 are shown without the vehicle seat 4, the upper frame structure 20, and the lower frame structure 30, to better illustrate the configuration of components involved. The upper rail 1 is movably arranged in relation to the lower rail 2 in the longitudinal direction D_{LO}, as indicated with the double arrow in figure 4, for a convenient adjustment and positioning of the vehicle seat 4 in relation to the floor structure 3. A lower base surface 2b of the lower rail 2 is positioned in connection to an upper surface 3c of the floor structure 3. The seat system S may be provided with suitable positioning and locking arrangements for positioning of the upper rail 1 in relation to the lower rail 2 when adjusting the vehicle seat 4. The floor structure 3 is forming part of the seat system S, as will be further described below. Usually, two parallel seat rail structures are used for holding one vehicle seat 4, as understood from for example figures 2a-e. In figures 1a-c, the seat system S is illustrated in connection to a front vehicle seat 4, but the seat system S may be used also for other adjustable vehicle seats.

The floor structure 3 is suitably an integrated structural part of a body-in-white structure of the vehicle V having an extension in the longitudinal direction D_{LO} and lateral direction D_{LO}, or essentially in the longitudinal direction D_{LO} and lateral direction D_{LO}, as indicated in for example figure 4. With a body-in-white structure of the vehicle V is meant a car body construction in which the car body's sheet metal components have been welded together, where any moving parts, the motor or engine, the chassis or the chassis sub-assemblies, and the trim have not yet been added to the car body construction. By attaching the lower rail 2 to the floor structure 3 integrated in the body-in-white structure of the vehicle V, a secure attachment of the lower rail 2 is accomplished. Non-illustrated additional fastening brackets or similar arrangements may for example be used for the attachment of the lower rail 2 to the floor structure 3, where screw fasteners or similar fastening devices can be used for a firm and secure attachment of the lower rail 2 to the floor structure 3 via the fastening brackets.

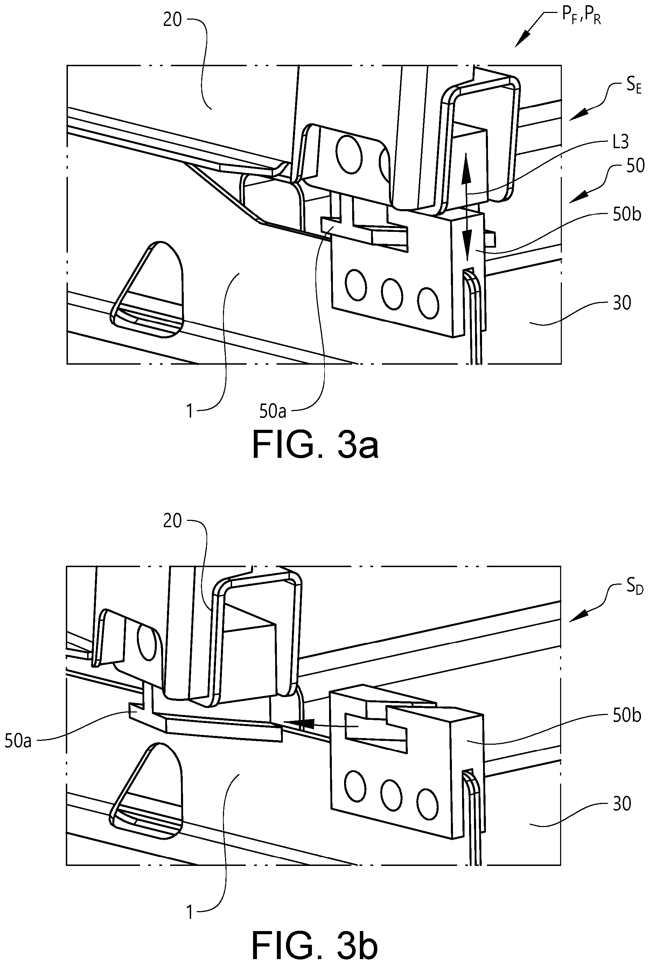

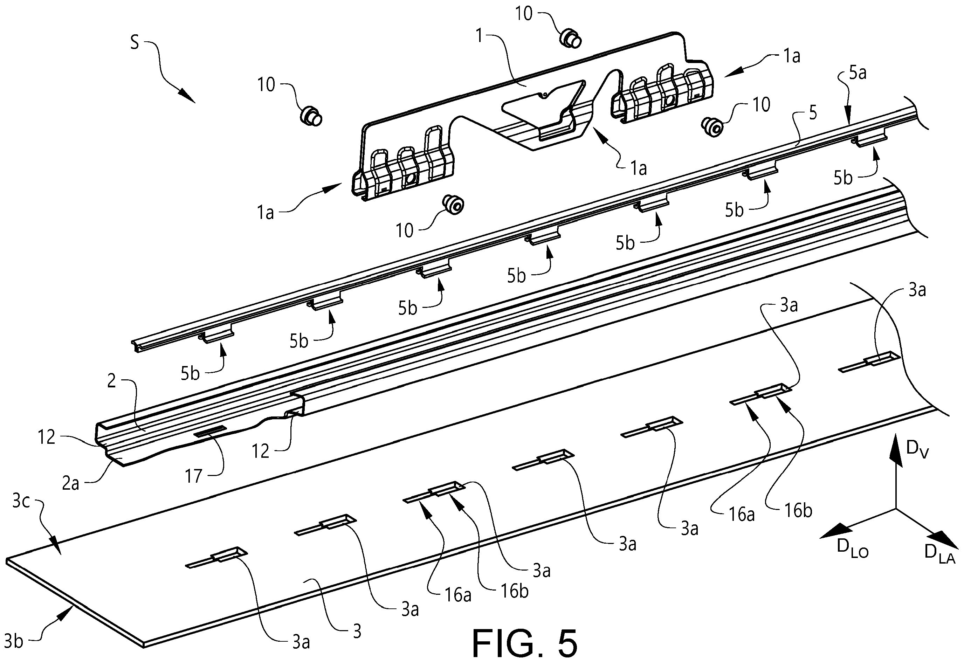

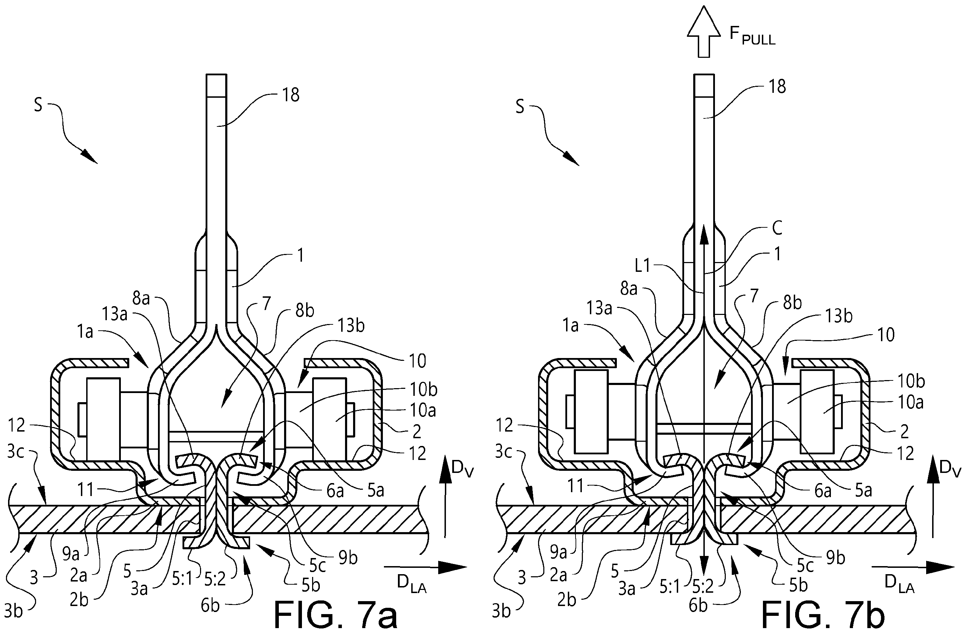

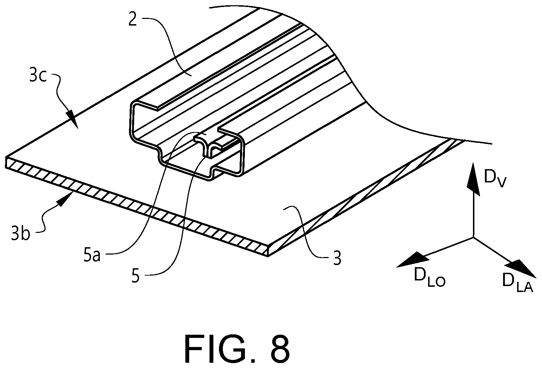

The seat system S further comprises an elongated load member 5 attached to the lower rail 2, as shown in for example figures 5 and 8. The load member 5 comprises an upper part 5a and one or more lower parts 5b. In the illustrated embodiment the upper part 5a is extending along the length of the load member 5, and a plurality of lower parts 5b are arranged in connection to the upper part 5a in a spaced apart configuration, as understood from for example figure 3. The upper part 5a of the load member 5 has an upper T-shaped cross-sectional configuration with a laterally extending upper flange 6a, as shown in for example figures 7a-b. The one or more lower parts 5b of the load member 5 have lower T-shaped cross-sectional configurations with a laterally extending lower flange 6b, as shown in for example figures 7a-b. A web section 5c of the load member 5 is connecting the upper flange 6a and the lower flange 6b. With a T-shaped cross-sectional configuration is meant a cross-sectional shape having a T-shape, or a shape similar to a T-shape such as the double hook like configuration shown in figures 7a-b. The cross-sectional configuration of the load member 5 where the upper parts 5a and the lower parts 5b correspond to each other is similar to an I-beam structure, or similar to an I-beam like structure, as shown in figures 7a-b.

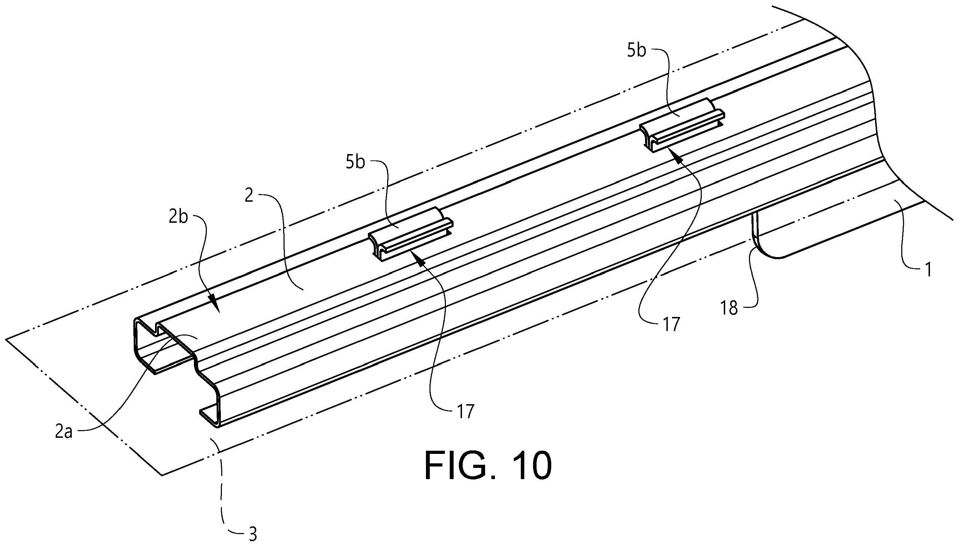

As shown in figure 10, a lower section 2a of the lower rail 2 is arranged with a plurality rail openings 17 arranged for receiving the plurality of lower parts 5b. The lower parts 5b are suitably positioned through corresponding rail openings 17 when mounting the load member 5 to the lower rail 2, and thereafter the lower parts 5b could be bent into the lower T-shaped cross-sectional configurations, as understood from figure 10. In this way, one or more lower parts 5b of the load member 5 are extending through the lower section 2a of the lower rail 2. The load member 5 and the lower rail 2 are made of suitable materials having high strength, as for example high-strength steel, polymers, composite materials, or other suitable materials or combinations of materials. The load member 5 is attached to the lower rail 2 with suitable fastening means, such as for example welds, glue, rivets, or screw fasteners.

In the illustrated embodiment, the load member 5 comprises two joined material sections 5:1,5:2 forming the upper and lower T-shaped cross-sectional configurations with the web section 5c in-between. The material sections 5:1,5:2 each at least partly has a U-shape, or U-shape like, cross-sectional configuration, as shown in figures 7a-b. This construction with the two joined material sections may simplify the mounting or assembling of the load member 5 to the lower rail 2, since each of the sections can be positioned into the rail openings 17 and thereafter attached to each other and to the lower rail 2.

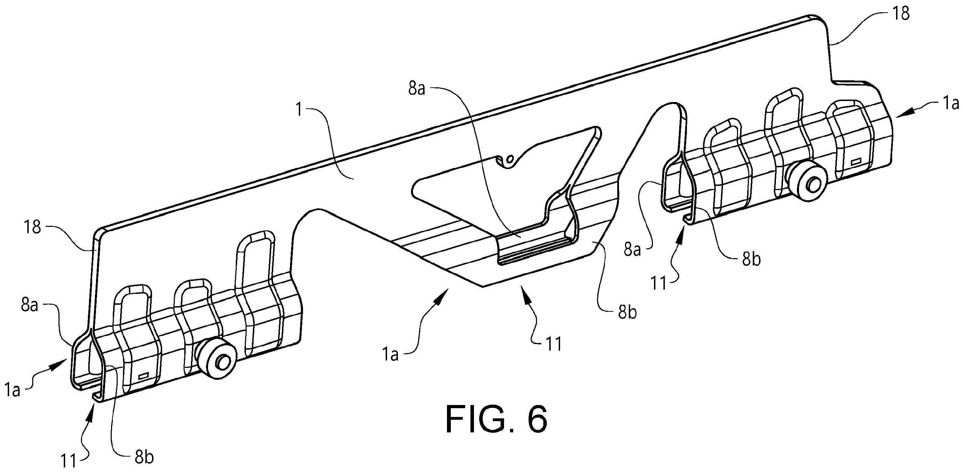

In an assembled state of the seat system S, as partly shown in for example figures 7a-b, the upper part 5a of the load member 5 is extending into a lower portion 1a of the upper rail 1. As understood from for example figure 6, the lower portion 1a may be sectioned into more than one structural part of the upper rail 1 for receiving the upper part 5a. In the illustrated embodiment, the upper rail 1 is arranged with three sections that together are forming the lower portion 1a and the upper part 5a of the load member 5 is extending into all three sections forming the lower portion 1a.

Each upper rail 1 is further provided with upper portions 18 for attaching or integrating the lower frame structure 30. As shown in figures 2a-d, the lower frame structure 30 is extending in the lateral direction D_{LA} between two upper rails 1. The lower frame structure 30 may be arranged as a separate structural part that is attached to and/or integrated with the upper rails 1, or alternatively, the lower frame structure 30 is arranged with a number of structural parts that are connected to and/or integrated with the upper rails 1. The lower frame structure 30 may be made of any suitable material, as for example steel, aluminium, composite materials, polymers, or other suitable materials or combinations of materials. The lower frame structure 30 is attached to the upper rails 1 with suitable fastening means, such as for example welds, glue, rivets, or screw fasteners.

The seat system S further comprises laterally extending bearing structures 10, as shown in for example figures 5 and 7a-b. The bearing structures 10 are attached to the upper rail 1, and the bearing structures 10 are extending laterally in opposite directions from the upper rail 1. The bearing structures 10 may be arranged pairwise on opposite sides of the upper rail. The bearing structures 10 are configured for movably engaging the lower rail 2 and for providing a low-friction engagement between the upper rail 1 and the lower rail 2. The bearing structures 10 comprise bearings 10a, and the bearings 10a are suitably connected to the upper rail 1 via extending shaft structures 10b or similar arrangements for lateral positioning of the bearings 10a in relation to the lower rail 2.

The lower rail 2 comprises two bearing surfaces 12 laterally arranged on opposite sides of the load member 5, as shown in for example figures 7a-b. The bearings 10a and the bearing surfaces 12 are configured for interacting with each other when the upper rail 1 is displaced in relation to the lower rail 2. In the embodiment illustrated in figures 3 and 4, the first rail 1 comprises two pairs of bearing structures 10 arranged for interacting with the bearing surfaces 12. However, any suitable number of bearing structures 10 may be used. The bearings 10a may for example be roller bearings and the roller bearings may be provided with wheel elements or similar structures for rolling interaction with the bearing surfaces 12 upon longitudinal displacement of the upper rail 1 in relation to the lower rail 2. The bearings 10a may alternatively be sliding bearings for sliding interaction with the bearing surfaces 12 upon longitudinal displacement of the upper rail 1 in relation to the lower rail 2. Other types of bearings may also be used depending on the construction and design of the system. The bearing structures 10 are as illustrated in figures 7a-b positioned above a lower end 11 of the lower portion 1a of the upper rail 1 for a compact and robust construction of the system.

As shown in figures 7a-b, the one or more lower parts 5b of the load member 5 are extending through the floor structure 3. More specifically, the one or more lower parts 5b of the load member 5 are extending through corresponding openings 3a of the floor structure 3. The positions of the openings 3a are coinciding with the spacing of the lower parts 5b along the load member 5, as understood from for example figure 5. The openings 3a may have narrowing configurations, where the openings 3a are tapering in the longitudinal direction D_{LO}. Suitable narrowing shapes are for example keyhole like shapes as illustrated in figure 5. However, any suitable narrowing shape may be used. The openings 3a in the illustrated embodiment are provided with narrow sections 16a and wide sections 16b.

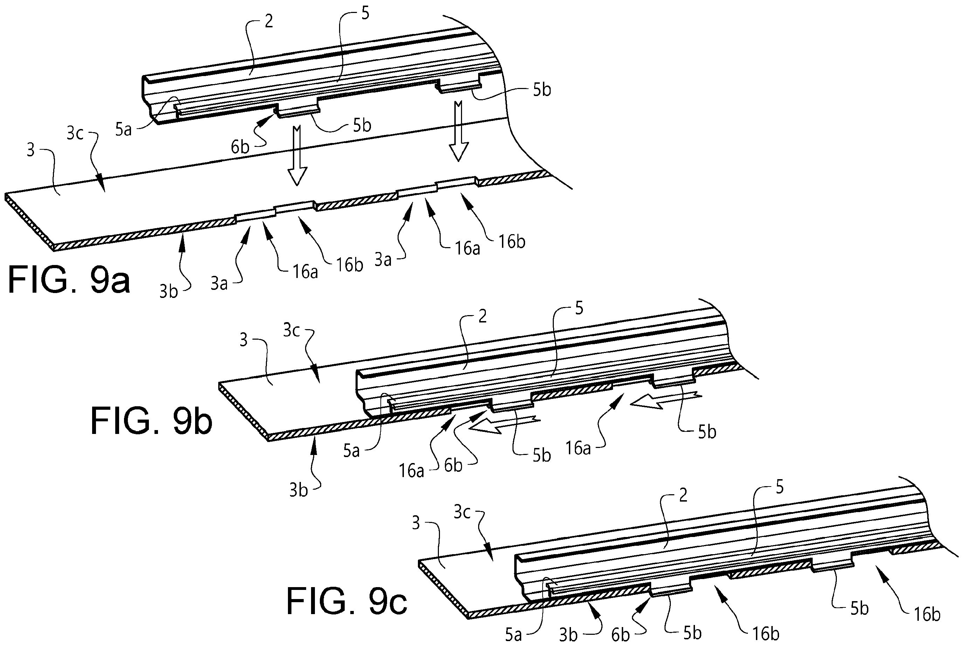

The wide sections 16b of the openings 3a have suitable sizes for receiving the lower parts 5b, and the lower parts 5b with the lower flange 6b are inserted into the wide sections 16b when mounting the lower rail 2 with the load member 5 to the floor structure 3, as illustrated in figure 9a. The lower parts 5a are entering the wide sections 16b in a downwards movement of the lower rail 2, as indicated with arrows in figure 9a. When inserted into the openings 3a, the lower parts 5b are extending through the floor structure 3 and the lower flanges 6b are positioned below the floor structure 3, as illustrated in figure 9b. To complete the mounting of the lower rail 2 to the floor structure 3, the lower rail 2 is after insertion into the wide sections 16b pushed in a direction towards the narrow sections 16a, as indicated with arrows in figure 9b. By pushing the lower rail 2 in the direction towards the narrow sections 16a, the lower flanges 6b will be positioned below the floor structure 3 into a final mounting position, as shown in figures 7a-b and 9c. When the lower flanges 6b are positioned below the floor structure 3 within the narrow sections 16a, the lower rail 2 is prevented from being displaced in an upwards direction due to engagement between the lower flanges 6b and a lower surface 3b of the floor structure 3, as understood from figures 7a-b. The second rail 2 may be further attached to the floor structure 3 via the non-illustrated fastening brackets, as described above. When the lower rail 2 is attached to the floor structure 3, the upper rail 1 may be mounted to the lower rail 2.

The lower portion 1a of the upper rail 1 suitably has a bell-shaped cross-sectional configuration, or a bell-shape like cross-sectional configuration, and the lower portion is with this configuration formed with a cavity 7, as shown in for example figures 7a-b. The cavity 7 is configured for embracing the upper flange 6a of the load member 5.

The upper rail 1 comprises a first side section 8a and a second side section 8b. The side sections are suitably joined to each other with appropriate fastening means. The upper rail 1 may for example be made of two welded sheets that are forming the bell-shaped lower portion, and the welded sheets are forming lateral sides of the upper rail 1. The cavity 7 is formed between the first side section 8a and the second side section 8b, as shown in for example figures 7a-b.

The first side section 8a comprises a lateral inwardly projecting first flange 9a and the second side section 8b comprises a lateral inwardly projecting second flange 9b. The first flange 9a and the second flange 9b are forming the lower end 11 of the lower portion 1a. As shown in figures 7a-b, the first flange 9a and the second flange 9b are arranged below the upper flange 6a, and with this configuration, the first flange 9a and the second flange 9b are extending in inwards directions towards the load member 5. The first side section 8a and the second side section 8b are together with the first flange 9a and the second flange 9b forming the cavity 7, which cavity 7 is embracing the upper flange 6a of the load member 5.

The upper flange 6a comprises a first flange section 13a and a second flange section 13b, which are extending laterally on opposite sides of the web section 5c, as shown in figures 7a-b. The first flange 9a is arranged below the first flange section 13a and the second flange 9b is arranged below the second flange section 13b. In the illustrated embodiment, the first flange 9a is extending inwards towards the load member 5 from the first side section 8a with an upwards inclined configuration, and the second flange 9b is extending inwards towards the load member 5 from the second side section 8b with an upwards inclined configuration. The first flange section 13a is extending outwards towards the first side section 8a from the web section 5c with a downwards inclined configuration, and the second flange section 13b is extending outwards towards the second side section 8b from the web section 5c with a downwards inclined configuration. The first flange section 13a has suitably an extension parallel to, or essentially parallel to, the extension of the first flange 9a, and the second flange section 13b has suitably an extension parallel to, or essentially parallel to, the extension of the second flange 9b.

The load member 5 is configured for being directly in engagement with the floor structure 3 and the lower portion 1a of the upper rail 1 in a vehicle impact event for establishing a first load path L1 from the floor structure 3 to the upper rail 1 via the load member 5, as shown in for example in figure 7b. With a vehicle impact event is meant any situation where the vehicle V is exposed to impact forces, such as when the vehicle V is hitting an object or an object is hitting the vehicle V. Typical vehicle impact events are when the vehicle V is involved in a crash situation or collision, for example with another vehicle, or if the vehicle V leaves a roadway in a run-off-road collision or similar event. If the vehicle V is involved in a collision, impact forces will act on the vehicle seat 4 and the seat system S.

In a head-on collision, or in a collision where the front end of the vehicle V runs into an object, the front part of the upper rail 1 is pushed downwards towards the second rail 2 by a pushing force F_{PUSH} and the rear part of the upper rail 1 is pulled in a direction upwards away from the second rail 2 by a pulling force F_{PULL}, due to the forces acting on the vehicle seat 4 causing a rotational movement. In a rear-end collision, or in a collision where the rear end of the vehicle V runs into an object, the front part of the upper rail 1 is pulled in a direction upwards away from the second rail 2 by a pulling force F_{PULL} and the rear part of the upper rail 1 is pushed downwards towards the second rail 2 by a pushing force F_{PUSH}, due to the forces acting on the vehicle seat 4 causing a rotational movement. The pushing force F_{PUSH} and the pulling force F_{PULL} are schematically illustrated in figure 4.

The strength of the seat system S is critical when a pulling force F_{PULL} is acting on the upper rail 1, such as in vehicle impact events described above. The pulling force F_{PULL} is illustrated with an arrow in figure 7b, indicating that a part of the upper rail 1 is pulled in a direction upwards away from the second rail 2. When the pulling force F_{PULL} is acting on a part of the seat system S, the load member 5 has the function to directly engage the floor structure 3 and directly engage the upper rail 1. In this way, the floor structure 3 is connected to the upper rail 1 via the load member 5 for establishing the first load path L1 from the floor structure 3 to the upper rail 1 via the load member 5. The load member 5 is establishing a strong and robust construction of the seat system S that is preventing large and unwanted deformations of the rails. With the system configuration, the load member 5 is directly in engagement with both the floor structure 3 and the lower portion 1a in a vehicle impact event. The first load path L1 established in a vehicle impact event from the floor structure 3 to the upper rail 1 via the load member 5, is through the engagement of the load member 5 following a centre line C of the rails from the floor structure 3 to the upper rail 1 for establishing a short load path compared to traditional systems, as indicated in figure 7b.

More specifically, the upper flange 6a is configured for being in engagement with the lower portion 1a of the upper rail 1 in a vehicle impact event. The first flange 9a is engaging the first flange section 13a in a vehicle impact event, and the second flange 9b is engaging the second flange section 13b in a vehicle impact event for a strong connection between the upper rail 1 and the load member 5. In this way, the first flange 9a and the second flange 9b are configured for being in engagement with the upper flange 6a in a vehicle impact event. As understood from figure 7b, the parts involved are arranged as hook-like elements that are interacting with each other in a vehicle impact event, preventing that the upper rail 1 is separated from the lower rail 2 due to the connection of the load member 5 to the lower portion 1a. In a vehicle impact event, the upper rail 1 is pulled a small distance upwards away from the lower rail 2 due to minimal play between parts involved. As shown in figure 7a, there is a small play between the upper flange 6a and the respective first flange 9a and the second flange 9b in normal operating conditions, which is allowing the movement of the upper rail 1 in relation to the lower rail 2 in the longitudinal direction D_{LO} for the positioning of the vehicle seat 4 relative to the floor structure 3.

In a similar way, the one or more lower parts 5b of the load member 5 are configured for being in engagement with the lower surface 3b of the floor structure 3 in a vehicle impact event. More specifically, the lower flange 6b is configured for being in engagement with the floor structure 3 in a vehicle impact event, and the lower flange 6b is engaging the lower surface 3b of the floor structure 3 in a vehicle impact event for a strong connection between the floor structure 3 and the load member 5. As understood from figure 7b, the lower flange 6b is interacting with the floor structure 3 preventing that the lower rail 2 is separated from the floor structure 3. As shown in figure 7b, the lower flanges 6b of the lower parts 5b are arranged as hook-like elements that are interacting with the floor structure 3 in a vehicle impact event, preventing that the lower rail 2 is separated from the floor structure 3 due to the connection of the load member 5 to the floor structure 3. In a vehicle impact event, the lower rail 2 may be pulled a small distance upwards away from the floor structure 3 due to a small play between the lower flange 6b and the lower surface 3b of the floor structure 3. The small play between the lower flange 6a and the lower surface 3b of the floor structure 3 in normal operating conditions is allowing the mounting of the upper rail 2 to the floor structure, as described above.

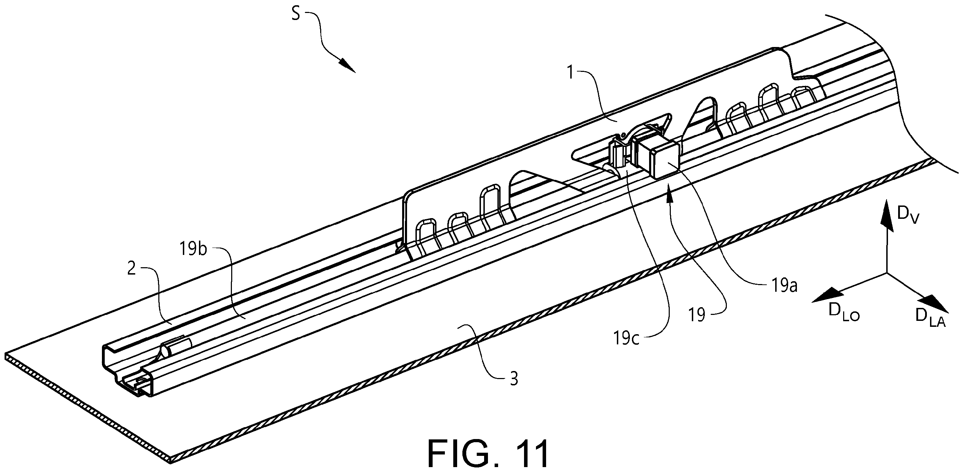

As illustrated in figure 11, the seat system S may further be provided with a drive mechanism 19 for positioning the upper rail 1 in relation to the lower rail 2. The drive mechanism may comprise an electric motor 19a and be configured as a worm drive mechanism. The worm drive mechanism may comprise an elongated threaded rod 19b connected to the lower rail 2 that is interacting with a worm gear 19c arranged on the upper rail 1. It should be understood that the drive mechanism 19 could have other suitable constructions, such as for example a linear actuator or ball screw mechanism.

As described above, the seat system S comprises the upper frame structure 20 and the lower frame structure 30. The upper frame structure 20 is configured for holding the vehicle seat 4, and the seating structure forming the vehicle seat 4 is firmly attached to the upper frame structure 20 for a rigid construction of the seat system S. The upper frame structure 20 may be arranged as a separate structural part that is attached to and/or integrated with the vehicle seat 4, or alternatively, the upper frame structure 20 is arranged with a number of structural parts that are connected to and/or integrated with the vehicle seat 4. The upper frame structure 20 may be made of any suitable material, as for example steel, aluminium, composite materials, polymers or other suitable materials or combinations of materials. The upper frame structure 20 is attached to the vehicle seat 4 with suitable fastening means, such as for example welds, glue, rivets, or screw fasteners.

A swivel unit 40 is arranged between the upper frame structure 20 and the lower frame structure 30, as shown in figures 2a-e. The swivel unit 40 is enabling a rotational movement of the vehicle seat 4 relative to the floor structure 3, through rotation of the upper frame structure 20 relative to the lower frame structure 30 by the swivel unit 40. In the illustrated embodiment, the upper frame structure 20 is rotatably arranged relative to the lower frame structure 30 by the swivel unit 40 around the rotational axis A_{R}. The swivel unit may 40 have any suitable design that is enabling a rotational movement of the upper frame structure 20 relative to the lower frame structure 30, and the swivel unit may include bearing structures or similar arrangements for an efficient rotational displacement. The swivel unit 40 may further be arranged as or comprise an electric motor connected to the upper frame structure 20 or to the lower frame structure 30, where a motor shaft of the electric motor is connected to the other of the upper frame structure 20 and the lower frame structure 30. The swivel unit 40 is rotatably connecting the upper frame structure 20 and the lower frame structure 30, and the connection of the upper frame structure 20 to the lower frame structure 30 by the swivel unit 40 is preventing separation of the parts from each other in a vehicle impact event. In this way, the swivel unit 40 is configured for establishing a second load path L2 from the upper rail 1 to the vehicle seat 4 via the lower frame structure 30 and the upper frame structure 20 in a vehicle impact event. The swivel unit 40 is through the rotatable connection to the upper frame structure 20 and the lower frame structure 30 establishing a second load path L2 for any rotational position of the vehicle seat 4 relative to the floor structure 3 for an efficient load distribution in a vehicle impact event. The second load path L2 is efficiently preventing that the upper frame structure 20 and the lower frame structure 30 are separated from each other in a vehicle impact event for a strong and robust construction of the seat system S.

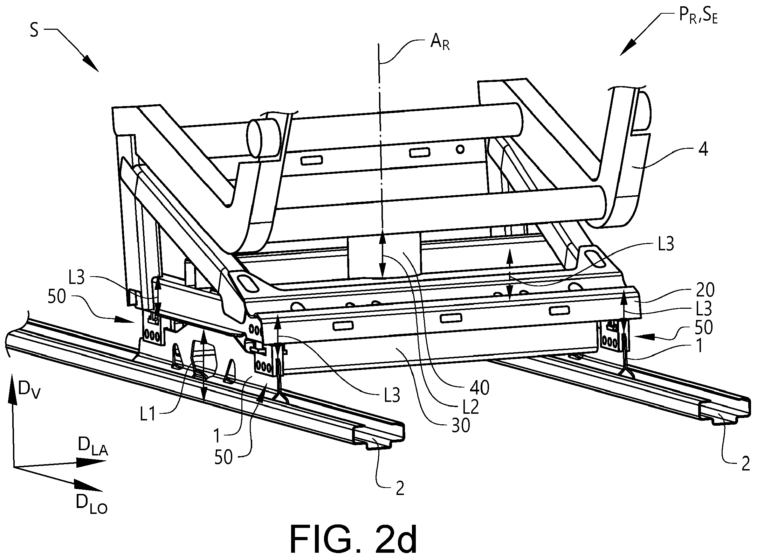

The seat system S further comprises one or more connection members 50, where the one or more connection members 50 are anchoring the upper frame structure 20 to the lower frame structure 30 when the vehicle seat 4 is arranged in the forwards position P_{F} or the rearwards position P_{R}. Each connection member 50 is configured for establishing a third load path L3 when the vehicle seat 4 is arranged in the forwards position P_{F}, as shown in figure 2a, from the upper rail 1 to the vehicle seat 4 via the lower frame structure 30 and the upper frame structure 20 in a vehicle impact event. Each connection member 50 is further configured for establishing a third load path L3 when the vehicle seat 4 is arranged in rearwards position P_{R}, as shown in figure 2d, from the upper rail 1 to the vehicle seat 4 via the lower frame structure 30 and the upper frame structure 20 in a vehicle impact event. Each connection member 50 is in this way establishing a third load path L3 when the vehicle seat 4 is arranged in the forwards position P_{F} or the rearwards position P_{R} for an efficient load distribution in a vehicle impact event. The connection members 50 are efficiently preventing that the upper frame structure 20 and the lower frame structure 30 are separated from each other in a vehicle impact event for a strong and robust construction of the seat system S.

In the embodiment illustrated in figures 2a-e, the seat system S comprises four connection members 50. The connection members 50 are anchoring the upper frame structure 20 to the lower frame structure 30 when the vehicle seat 4 is arranged in the forwards position P_{F}, as shown in figure 2a. Further, the connection members 50 are anchoring the upper frame structure 20 to the lower frame structure 30 when the vehicle seat 4 is arranged in the rearwards position P_{R}, as shown in figure 2d. Each connection member 50 is establishing a third load path L3 when the vehicle seat 4 is arranged in the forwards position P_{F} or the rearwards position P_{R} from the upper rail 1 to the vehicle seat 4 via the lower frame structure 30 and the upper frame structure 20 in a vehicle impact event, as indicated in figures 2a and 2d.

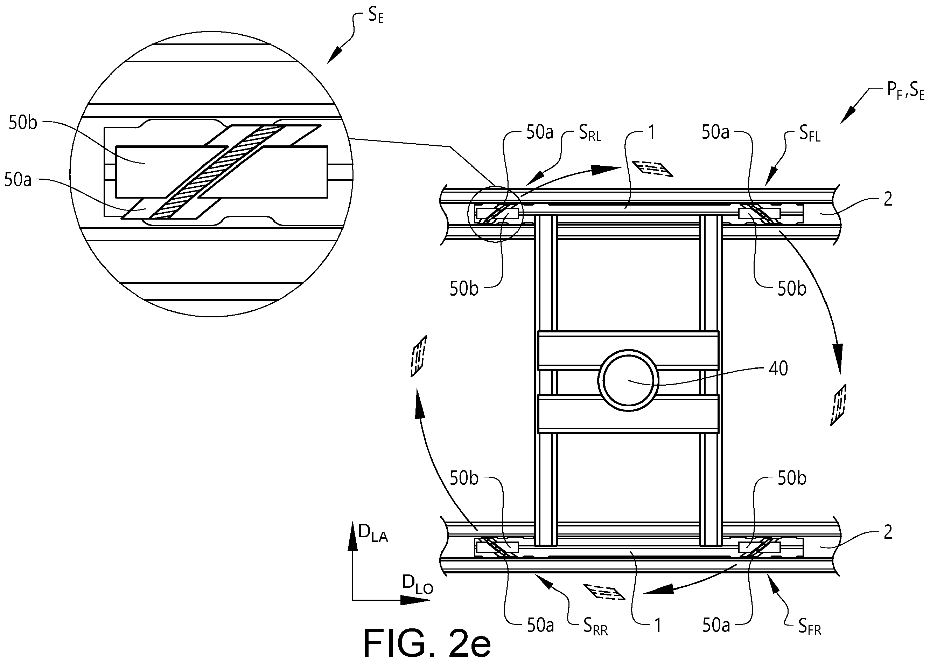

In the embodiment illustrated in figures 2a-e, the upper frame structure 20 and the lower frame structure 30 comprise a front left side section S_{FL}, a front right side section SFR, a rear left side section S_{RL} and a rear right side section S_{RR}. The four connection members 50 are arranged at the front left side section S_{FL}, front right side section S_{FR}, rear left side section S_{RL} and rear right side section S_{RR}. It should be understood that the expressions front, rear, left and right are referring to the respective parts when the vehicle seat 4 is arranged in the forwards position P_{F}, as illustrated in figures 2a and 2e. The arrangement of the connection members at side sections is securing an efficient load distribution via the established third load paths L3 in a vehicle impact event.

The connection members 50 comprise first connection parts 50a arranged on the upper frame structure 20 and corresponding second connection parts 50b arranged on the lower frame structure 30, as shown in figures 2a-e. The connection members 50 are arranged in a way where each connection member 50 comprises one first connection part 50a arranged on the upper frame structure 20 and one cooperating second connection part 50b arranged on the lower frame structure 30. Each first connection part 50a is engaging a corresponding second connection part 50b when the vehicle seat 4 is arranged in the forwards position P_{F}. Further, each first connection part 50a is engaging a corresponding second connection part 50b when the vehicle seat 4 is arranged in the rearwards position P_{R}.

The first connection parts 50a or the second connection parts 50b may be configured as T-shaped connection elements, where the other of the first connection parts 50a and the second connection parts 50b are configured as a track structure for receiving the T-shaped connection elements when the vehicle seat 4 is arranged in the forwards position P_{F} or the rearwards position P_{R}. The T-shaped and track structure configurations are securing a strong connection between the first connection parts and the second connection parts in a vehicle impact event when the vehicle seat is arranged in the forwards position or the rearwards position.

In the embodiment illustrated in figures 2a-e, the first connection parts 50a are configured as T-shaped connection elements, and the second connection parts 50b are configured as track structures for receiving the T-shaped connection elements when the vehicle seat 4 is arranged in the forwards position P_{F} or the rearwards position P_{R}. The first connection parts 50a and the second connection parts 50b are illustrated more in detail in figures 3a-b.

When the vehicle seat 4 is arranged in the forwards position P_{F}, as schematically illustrated in figures 2a, 2e and 3a, the first connection elements 50a and second connection elements 50b are arranged in an engaged state S_{E}. When the vehicle seat 4 is arranged in the rearwards position P_{R}, as schematically illustrated in figures 2d and 3a, the first connection elements 50a and second connection elements 50b are arranged in the engaged state S_{E}. In the engaged state S_{E}, each first connection element 50a is in engagement with a corresponding second connection element 50b. It should however be understood that due to the rotational displacement of the upper frame structure 20 relative to the lower frame structure 30 between the forwards position P_{F} and the rearwards position P_{R}, the first connection elements 50a are each in engagement with a different second connection element 50b in the rearwards position P_{R} compared to the forwards position P_{F}.

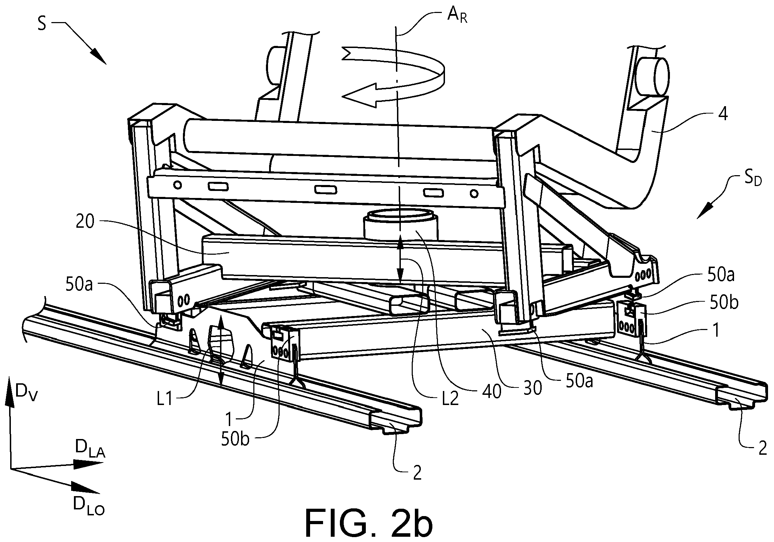

When the vehicle seat 4 is rotatably displaced between the forwards position P_{F} and the rearwards position P_{R}, as schematically illustrated in figures 2b-c and 3b, the first connection elements 50a and second connection elements 50b are arranged in a disengaged state S_{D}. In the disengaged state S_{D}, the first connection elements 50a and second connection elements 50b are not in engagement with each other.

Upon rotational movement of the upper frame structure 20 relative to the lower frame structure 30 from the forwards position P_{F} shown in figures 2a and 3a, the T-shaped connection elements of the first connection parts 50a are allowed to slide out and away from the track structure of the second connection parts 50b as shown in figure 3b. In a similar way, upon rotational movement of the upper frame structure 20 relative to the lower frame structure 30 from a non-forwards position into the forwards position P_{F}, the T-shaped connection elements of the first connection parts 50a are allowed to slide into from the track structure of the second connection parts 50b into the engaged state S_{E} shown in figures 2a and 3a.

Upon rotational movement of the upper frame structure 20 relative to the lower frame structure 30 from the rearwards position P_{R} shown in figures 2d and 3a, the T-shaped connection elements of the first connection parts 50a are allowed to slide out and away from the track structure of the second connection parts 50b as shown in figure 3b. In a similar way, upon rotational movement of the upper frame structure 20 relative to the lower frame structure 30 from a non-rearwards position into the rearwards position P_{R}, the T-shaped connection elements of the first connection parts 50a are allowed to slide into from the track structure of the second connection parts 50b into the engaged state S_{E} shown in figures 2d and 3a.

Through the arrangement of the connection members 50, the first connection parts 50a and the second connection parts 50b are configured for allowing rotation of the vehicle seat 4 relative to the floor structure 3. The first connection part 50a and the second connection part 50b are configured for reducing play in a vertical direction Dv between the upper frame structure 20 and the lower frame structure 30 when the vehicle seat 4 is arranged in the engaged state S_{E}, where in the engaged state S_{E} the vehicle seat 4 is arranged in the forwards position P_{F} or in the rearwards position P_{R}.

The construction of the seat system S with the first load path L1, the second load path L2, and the third load path L3, is providing load paths all the way from the floor structure 3 to the vehicle seat 4, when the vehicle seat 4 is arranged in the forwards position P_{F} or in the rearwards position P_{R}. The load paths are efficiently absorbing loads in a vehicle impact event for increased safety of vehicle occupants. The construction is further allowing a compact construction of the seat system S with low weight. The load paths are enabling straight and symmetric load distribution for the seat system.

The seat system S may further comprise a non-illustrated locking mechanism configured for locking the upper frame structure 20. The locking mechanism is in a locked state preventing rotational displacement between the upper frame structure 20 and the lower frame structure 30. The locking mechanism is in an unlocked state allowing rotational displacement between the upper frame structure 20 and the lower frame structure 30. The locking mechanism may for example be arranged as a mechanical locking device, or alternatively the locking device may be integrated in the swivel unit 40. If the swivel unit 40 is arranged as an electric motor, the electric motor may be arranged with a locking mechanism for preventing and allowing the rotational displacement.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Upper rail
- 1a:: Lower portion
- 2:: Lower rail
- 2a:: Lower section
- 2b:: Lower base surface
- 3:: Floor structure
- 3a:: Opening
- 3b:: Lower surface
- 3c:: Upper surface
- 4:: Vehicle seat
- 5:: Load member
- 5a:: Upper part
- 5b:: Lower part
- 5c:: Web section
- 6a:: Upper flange
- 6b:: Lower flange
- 7:: Cavity
- 8a:: First side section
- 8b:: Second side section
- 9a:: First flange
- 9b:: Second flange
- 10:: Bearing structure
- 10a:: Bearing
- 10b:: Shaft structures
- 11:: Lower end
- 12:: Bearing surface
- 13a:: First flange section
- 13b:: Second flange section
- 16a:: Narrow section
- 16b:: Wide section
- 17:: Rail opening
- 18:: Upper portion
- 19:: Drive mechanism
- 19a:: Electric motor
- 19b:: Threaded rod
- 19c:: Worm gear
- 20:: Upper frame structure
- 30:: Lower frame structure
- 40:: Swivel unit
- 50:: Connection member
- 50a:: First connection part
- 50b:: Second connection part

- A_{R}:: Rotational axis
- C:: Centre line
- D_{LA}:: Lateral direction
- D_{LO}:: Longitudinal direction
- D_{V}:: Vertical direction
- F_{PULL}:: Pulling force
- F_{PUSH}:: Pushing force
- L1:: First load path
- L2:: Second load path
- L3:: Third load path
- P_{F}:: Forwards position
- P_{R}:: Rearwards position
- S:: Seat system
- S_{D}:: Disengaged state
- S_{E}:: Engaged state
- S_{FL}:: Front left side section
- SFR:: Front right side section
- S_{RL}:: Rear left side section
- SRR:: Rear right side section
- V:: Vehicle

## Claims

1. A seat system (S) for a vehicle (V) comprising a vehicle seat (4), an upper frame structure (20), a lower frame structure (30), an upper rail (1) and a stationary lower rail (2) attached to a floor structure (3) of the vehicle (V),
wherein the vehicle seat (4) is attached to the upper frame structure (20), the upper frame structure (20) is rotatably attached to the lower frame structure (30), the lower frame structure (30) is attached to the upper rail (1), and the upper rail (1) is movably arranged in relation to the lower rail (2) in a longitudinal direction (D_{LO}),
wherein the seat system (S) further comprises an elongated load member (5) attached to the lower rail (2), wherein an upper part (5a) of the load member (5) is extending into a lower portion (1a) of the upper rail (1),
wherein one or more lower parts (5b) of the load member (5) are extending through the floor structure (3), wherein the load member (5) is configured for being directly in engagement with the floor structure (3) and the lower portion (1a) of the upper rail (1) in a vehicle impact event for establishing a first load path (L1) from the floor structure (3) to the upper rail (1) via the load member (5).

2. The seat system (S) according to claim 1,
wherein a swivel unit (40) is arranged between the upper frame structure (20) and the lower frame structure (30), wherein the swivel unit (40) is configured for enabling a rotational movement of the vehicle seat (4) relative to the floor structure (3), wherein the swivel unit (40) is configured for establishing a second load path (L2) from the upper rail (1) to the vehicle seat (4) via the lower frame structure (30) and the upper frame structure (20) in a vehicle impact event.

3. The seat system (S) according to claim 2,
wherein the seat system (S) further comprises one or more connection members (50), wherein the one or more connection members (50) are anchoring the upper frame structure (20) to the lower frame structure (30) when the vehicle seat (4) is arranged in a forwards position (P_{F}) or a rearwards position (P_{R}), wherein each connection member (50) is configured for establishing a third load path (L3) when the vehicle seat (4) is arranged in the forwards position (P_{F}) or the rearwards position (P_{R}) from the upper rail (1) to the vehicle seat (4) via the lower frame structure (30) and the upper frame structure (20) in a vehicle impact event.

4. The seat system (S) according to claim 3,
wherein the upper frame structure (20) and the lower frame structure (30) comprise a front left side section (S_{FL}), a front right side section (S_{FR}), a rear left side section (S_{RL}) and a rear right side section (S_{RR}), wherein the connection members (50) are arranged at one or more of the front left side section (S_{FL}), front right side section (S_{FR}), rear left side section (S_{RL}) and rear right side section (S_{RR}).

5. The seat system (S) according to claim 3 or 4,
wherein each connection member (50) comprises a first connection part (50a) arranged on the upper frame structure (20) and a second connection part (50b) arranged on the lower frame structure (30), wherein the first connection part (50a) or the second connection part (50b) is configured as a T-shaped connection element, wherein the other of the first connection part (50a) and the second connection part (50b) is configured as a track structure for receiving the T-shaped connection element in the forwards position (P_{F}) or the rearwards position (P_{R}).

6. The seat system (S) according to claim 5,
wherein the first connection part (50a) and the second connection part (50b) are configured for allowing rotation of the vehicle seat (4) relative to the floor structure (3), wherein the first connection part (50a) and the second connection part (50b) are configured for reducing play in a vertical direction (D_{V}) between the upper frame structure (20) and the lower frame structure (30) when the vehicle seat (4) is arranged in the forwards position (P_{F}) or the rearwards position (P_{R}).

7. The seat system (S) according to any preceding claim,
wherein the seat system (S) further comprises a locking mechanism configured for locking the upper frame structure (20), wherein the locking mechanism in a locked state is preventing rotational displacement between the upper frame structure (20) and the lower frame structure (30), wherein the locking mechanism in an unlocked state is allowing rotational displacement between the upper frame structure (20) and the lower frame structure (30).

8. The seat system (S) according to any preceding claim,
wherein the one or more lower parts (5b) of the load member (5) are extending through corresponding openings (3a) of the floor structure (3).

9. The seat system (S) according to any preceding claim,
wherein the one or more lower parts (5b) of the load member (5) are configured for being in engagement with a lower surface (3b) of the floor structure (3) in a vehicle impact event.

10. The seat system (S) according to any preceding claim,
wherein the upper part (5a) of the load member (5) has an upper T-shaped cross-sectional configuration with a laterally extending upper flange (6a), wherein the upper flange (6a) is configured for being in engagement with the lower portion (1a) of the upper rail (1) in a vehicle impact event.

11. The seat system (S) according to claim 10,
wherein the lower portion (1a) of the upper rail (1) has a bell-shaped cross-sectional configuration forming a cavity (7), wherein the cavity (7) is configured for embracing the upper flange (6a).

12. The seat system (S) according to claim 11,
wherein the upper rail (1) comprises a first side section (8a) and a second side section (8b) joined to each other, wherein the cavity (7) is formed between the first side section (8a) and the second side section (8b), wherein the first side section (8a) comprises a lateral inwardly projecting first flange (9a) and the second side section (8b) comprises a lateral inwardly projecting second flange (9b), wherein the first flange (9a) and the second flange (9b) are arranged below the upper flange (6a) and configured for being in engagement with the upper flange (6a) in a vehicle impact event.

13. The seat system (S) according to any preceding claim,
wherein the one or more lower parts (5b) of the load member (5) have lower T-shaped cross-sectional configurations with a laterally extending lower flange (6b), wherein the lower flange (6b) is configured for being in engagement with the floor structure (3) in a vehicle impact event.

14. A vehicle (V) comprising a seat system (S) according to any of claims 1-13.
